# EUROPÄISCHE PATENTANMELDUNG

(11) **EP 4 682 575 A1**
(43) Veröffentlichungstag der Anmeldung: **21.01.2026**
(21) Anmeldenummer: 25186854.3
(22) Anmeldetag: 02.07.2025
(51) Int. Cl.: G01S 7/02, G01S 7/41, G01S 13/88, G01V 3/12, G01V 3/15, G01S 7/292

(54) **VERFAHREN ZUM DURCHFÜHREN EINER OBJEKTDETEKTION IN EINEM BAUTEIL MIT EINEM ORTUNGSGERÄT**

(30) Priorität: 18.07.2024 DE 102024206768
(71) Anmelder: Robert Bosch GmbH, 70442 Stuttgart (DE)
(72) Erfinder: Sgarz, Heiko, 71229 Leonberg (DE)

(57) **Zusammenfassung**

Die Erfindung betrifft ein Verfahren zum Durchführen einer Objektdetektion in einem Bauteil mit einem Ortungsgerät. Ferner betrifft die Erfindung ein Computerprogramm, eine Vorrichtung, ein Speichermedium sowie ein Ortungsgerät zu diesem Zweck.

## Beschreibung

Die Erfindung betrifft ein Verfahren zum Durchführen einer Objektdetektion in einem Bauteil mit einem Ortungsgerät. Ferner betrifft die Erfindung ein Computerprogramm, eine Vorrichtung, ein Speichermedium sowie ein Ortungsgerät zu diesem Zweck.

### Stand der Technik

Ortungsgeräte, insbesondere Radarortungsgeräte können unterschiedliche Kanäle verwenden, wobei die Kanäle unterschiedliche Eigenschaften besitzen. Es kann z.B. einen zirkular polarisierten Kanal geben, der tatsächlich oder virtuell (mathematisch berechnet) eine zirkular polarisierte Welle aussendet. Dieser Kanal hat die Eigenschaft, dass in ihm kein oder ein relativ kleines Hintergrundsignal eines Bauteils wie einer Wand (oder Boden oder Decke) enthalten ist. Unter Hintergrundsignal kann das Signal verstanden werden, welches ohne Vorhandensein eines Objektes, d.h. von der Bauteilstruktur an sich, vorliegt.

Ein anderer Kanal ist z.B. der Kopolarisations-Kanal. Dieser sendet tatsächlich oder virtuell eine linear polarisierte Welle aus und empfängt auch in dieser Polarisationsrichtung wieder. Mit diesem Kanal können vor allem etwas dickere bzw. ausgedehntere Objekte sehr gut geortet werden. Der Kanal hat aber, damit verknüpft, den Nachteil, dass er ein starkes Hintergrundsignal besitzt, welches in vielen Fällen hauptsächlich aus der Oberflächenreflexion des Bauteils besteht. Dieses starke Hintergrundsignal muss in der Regel zunächst entfernt werden, um im Folgenden Objekte detektieren zu können. Ansonsten können die Objektsignale durch das Hintergrundsignal überlagert werden.

Bei Verwendung von Kanälen zumindest mit starkem Hintergrundsignal, muss dieses also i.d.R. entfernt werden. Dieses Entfernen wird beispielsweise dadurch umgesetzt, dass Signale an verschiedenen Positionen des Bauteils aufgenommen werden. Dabei ist entsprechend ein Verfahren des Ortungsgerätes notwendig. Aus diesen Signalen wird dann z.B. durch Medianbildung ein Hintergrundsignal bestimmt, welches dann von den Signalen zur Objektortung abgezogen werden kann.

Da bei dieser Methode ein Verfahren des Gerätes notwendig ist, kann diese nicht für den sogenannten Spot View eingesetzt werden. Im Spot View setzt der Benutzer das Ortungsgerät auf das Bauteil auf und erhält sofort ein Ergebnis. Für den Spot View können deshalb insbesondere nur Kanäle verwendet werden, die kein oder nur ein sehr kleines Hintergrundsignal besitzen. Dies schränkt jedoch die Leistungsfähigkeit ein, da bestimmte Objekte (z.B. ausgedehnte) wiederum in diesen Kanälen schlecht detektiert werden können.

### Offenbarung der Erfindung

Gegenstand der Erfindung ist ein Verfahren mit den Merkmalen des Anspruchs 1, ein Computerprogramm mit den Merkmalen des Anspruchs 8, eine Vorrichtung mit den Merkmalen des Anspruchs 9, ein computerlesbares Speichermedium mit den Merkmalen des Anspruchs 10 sowie ein Ortungsgerät mit den Merkmalen des Anspruchs 11. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, der erfindungsgemäßen Vorrichtung, dem erfindungsgemäßen computerlesbaren Speichermedium sowie dem erfindungsgemäßen Ortungsgerät, und jeweils umgekehrt, so dass bezüglich der Offenbarung der Erfindung stets auch eine wechselseitige Bezugnahme möglich ist.

Gegenstand der Erfindung ist insbesondere ein Verfahren zum Durchführen einer Objektdetektion in einem Bauteil mit einem Ortungsgerät, umfassend die nachfolgenden Schritte, wobei die Schritte nacheinander und/oder in einer bestimmten Reihenfolge durchgeführt werden können. Das Bauteil kann beispielsweise eine Wand, ein Boden oder eine Decke sein, beispielsweise in einem Gebäude. Ein zu detektierendes Objekt kann beispielsweise eine elektrische Leitung oder ein Rohr in dem Bauteil sein.

Das Verfahren gemäß der Erfindung basiert insbesondere auf einer Analyse von Radardaten, die von dem Ortungsgerät stammen, das ein Radarsignal aussendet und Reflexionen erkennt.

In einem ersten Schritt werden vorzugsweise Radardaten bereitgestellt, wobei die Radardaten aus einer Erfassung eines Radarsystems des Ortungsgerätes resultieren, wobei das Radarsystem in einem Bereich des Bauteils angeordnet ist und für die Erfassung der Radardaten ein Radarsignal in Richtung des Bauteils aussendet. Dass das Radarsystem in einem Bereich des Bauteils angeordnet ist kann insbesondere indizieren, dass das Radarsystem in einer Nähe des Bauteils vorliegt, wobei beispielsweise das Ortungsgerät an das Bauteil angelegt werden kann, beispielsweise gegen eine Oberfläche des Bauteils.

In einem weiteren Schritt wird vorzugsweise ein erstes Signal in den Radardaten ermittelt, welches für eine zeitlich erste Reflexion in den Radardaten spezifisch ist, auf Basis einer Analyse der Radardaten. Das erste Signal kann beispielsweise eine erhöhte Signalstärke, d.h. ein Ausschlag in einer Amplitude, in den Radardaten sein. Das erste Signal repräsentiert beispielsweise eine Oberfläche des Bauteils und kann im Rahmen der vorliegenden Erfindung auch als Hintergrundsignal bezeichnet werden. Auch kann das erste Signal, wenn ein Objekt sehr nah an der Oberfläche des Bauteils vorliegt und eine Auflösung des Radarsystems nicht ausreichend ist, das Signal, welches eine Reflexion an einer Oberfläche des Objekts repräsentiert, umfassen.

In einem weiteren Schritt wird vorzugsweise das ermittelte erste Signal auf Basis eines Vergleiches des ermittelten ersten Signals mit einem ersten definierten Schwellwert analysiert, um die Objektdetektion durchzuführen. Dabei wird insbesondere eine Signalstärke, bzw. eine Amplitude, verglichen.

Bei einem Unterschreiten des definierten Schwellwerts können ferner die folgenden Schritte durchgeführt werden.

In einem weiteren Schritt wird vorzugsweise das ermittelte erste Signal aus den Radardaten entfernt, um gefilterte Radardaten zu erhalten. Dies kann beispielsweise durch eine Subtraktion der Radardaten, die das erste Signal repräsentieren, von den verbleibenden Radardaten erfolgen.

In einem weiteren Schritt wird vorzugsweise ein zweites Signal in den Radardaten ermittelt, welches für eine zeitlich zweite Reflexion in den Radardaten spezifisch ist, auf Basis einer Analyse der gefilterten Radardaten. Die zeitlich zweite Reflexion ist somit insbesondere zu einem zeitlich späteren Zeitpunkt in den Radardaten repräsentiert. Das zweite Signal kann beispielsweise durch eine erhöhte Signalstärke, bzw. Amplitude, spezifisch für die zeitlich zweite Reflexion sein.

In einem weiteren Schritt wird vorzugsweise das ermittelte zweite Signal auf Basis eines Vergleiches des ermittelten zweiten Signals mit einem zweiten definierten Schwellwert analysiert, um die Objektdetektion durchzuführen. Auch hier wird insbesondere eine Signalstärke, bzw. eine Amplitude, verglichen.

Ein Ergebnis des Analysierens des ermittelten ersten Signals und/oder des Analysierens des ermittelten zweiten Signals kann dabei jeweils indizieren, ob ein Objekt in dem Bauteil vorliegt oder nicht. Auch ist denkbar, dass das Ergebnis eine Ausdehnung, bzw. Dicke, des Objektes oder auch eine Art des Objektes, z.B. "Rohr", umfasst.

Mit dem Verfahren gemäß der Erfindung kann es ermöglicht werden, eine genaue Objekterkennung in verschiedenen Szenarien zu erreichen. Dabei kann ein Szenario sein, dass ein Objekt sehr nah an einer Oberfläche des Bauteils vorliegt, sodass die Auflösung des Radarsystems nicht ausreicht, um das Objekt von einer Oberfläche des Bauteils zu unterscheiden. In einem weiteren Szenario ist das Objekt, wenn eines vorhanden ist, erst tiefer in dem Bauteil angeordnet, sodass die Reflexion der Oberfläche des Bauteils herausgefiltert werden kann, bevor die Objektdetektion durchgeführt wird.

Es ist denkbar, dass das Ermitteln des ersten Signals für zwei Kanäle des Radarsystems durchgeführt wird und das Entfernen des ermittelten ersten Signals aus den Radardaten sowie das Ermitteln des zweiten Signals nur bei einem zweiten Kanal des Radarsystems durchgeführt wird. So kann eine redundante Objektdetektion durchgeführt werden, was vorteilhaft eine Genauigkeit erhöhen und eine Fehleranfälligkeit reduzieren kann. Einer der Kanäle, insbesondere der zweite Kanal, kann dabei als Kopolarisationskanal und der weitere Kanal als ein zirkular polarisierter oder kreuzpolarisierter Kanal ausgebildet sein. Bei einem Kopolarisationskanal haben insbesondere eine Sende- und eine Empfangswelle dieselbe Polarisation. Wenn der eine Kanal als Kopolarisationskanal ausgelegt ist, können vorteilhaft dickere Bauteile mit einem höheren Signal-Rausch-Verhältnis als bei zirkular polarisierten Kanälen erfasst werden. Diese Eigenschaft kann vorteilhaft eine robustere Objektlokalisierung und eine bessere Leistung in Umgebungen mit starken Hintergrundsignalen ermöglichen.

Der erste definierte Schwellwert und der zweite definierte Schwellwert sind vorzugsweise unterschiedlich hoch, um mit dem zweiten definierten Schwellwert das Entfernen des ermittelten ersten Signals zu berücksichtigen. In anderen Worten kann der zweite definierte Schwellwert um einen Betrag geringer sein, den das erste ermittelte Signal voraussichtlich ausmacht, was beispielsweise auf Basis einer vorherigen Analyse oder Kalibrierung ermittelt werden kann. Ferner kann durch eine unterschiedliche Höhe der Schwellwerte eine Signalverarbeitung an spezifische Anwendungen angepasst werden. Diese Flexibilität kann es vorteilhaft ermöglichen, die Genauigkeit und Effizienz der Objektdetektion zu verbessern.

Zudem kann vorgesehen sein, dass das Verfahren ferner den folgenden Schritt umfasst:
- Initiieren einer Anzeige des Ergebnisses auf einem Display des Ortungsgerätes.

So kann ein Nutzer direkt darüber informiert werden, ob ein Objekt in dem Bauteil vorliegt und entsprechende Maßnahmen unternehmen, wie beispielsweise eine alternative Position für eine Bohrung zu suchen.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Ebenfalls Gegenstand der Erfindung kann ein Ortungsgerät zum Durchführen einer Objektdetektion in einem Bauteil sein, umfassend ein Radarsystem und ein Display. Das Ortungsgerät kann ausgebildet sein, um die Schritte des erfindungsgemäßen Verfahrens auszuführen.

Darüber hinaus kann das erfindungsgemäße Verfahren auch als ein computerimplementiertes Verfahren ausgeführt sein. Alternativ oder zusätzlich kann zumindest einer der offenbarten Verfahrensschritte computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Verfahrens, einer Vorrichtung, eines Speichermediums sowie eines Computerprogramms gemäß Ausführungsbeispielen der Erfindung,
- Fig. 2: eine schematische Darstellung eines Ortungsgerätes mit einem Radarsystem und einem Display sowie eines Bauteils mit einem Objekt gemäß Ausführungsbeispielen der Erfindung.

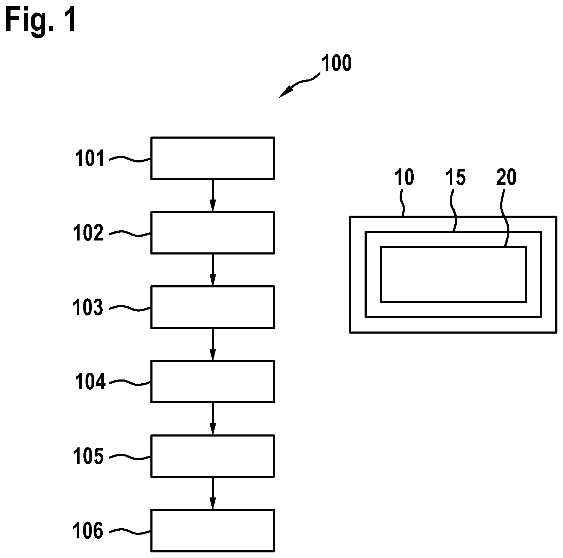

In Fig. 1 sind ein Verfahren 100, eine Vorrichtung 10, ein Speichermedium 15 sowie ein Computerprogramm 20 gemäß Ausführungsbeispielen der Erfindung schematisch dargestellt.

Fig. 1 zeigt insbesondere ein Ausführungsbeispiel für ein Verfahren 100 zum Durchführen einer Objektdetektion in einem Bauteil 1 mit einem Ortungsgerät 2. In einem ersten Schritt 101 werden Radardaten bereitgestellt, wobei die Radardaten aus einer Erfassung eines Radarsystems 3 des Ortungsgerätes 2 resultieren, wobei das Radarsystem 3 in einem Bereich des Bauteils 1 angeordnet ist und für die Erfassung der Radardaten ein Radarsignal in Richtung des Bauteils 1 aussendet. In einem zweiten Schritt 102 wird ein erstes Signal in den Radardaten ermittelt, welches für eine zeitlich erste Reflexion in den Radardaten spezifisch ist, auf Basis einer Analyse der Radardaten. In einem dritten Schritt 103 wird das ermittelte erste Signal auf Basis eines Vergleiches des ermittelten ersten Signals mit einem ersten definierten Schwellwert analysiert, um die Objektdetektion durchzuführen. Bei einem Unterschreiten des definierten Schwellwerts werden ferner die folgenden Schritte durchgeführt. In einem vierten Schritt 104 wird das ermittelte erste Signal aus den Radardaten entfernt, um gefilterte Radardaten zu erhalten. In einem fünften Schritt 105 wird ein zweites Signal in den Radardaten ermittelt, welches für eine zeitlich zweite Reflexion in den Radardaten spezifisch ist, auf Basis einer Analyse der gefilterten Radardaten. In einem sechsten Schritt 106 wird das ermittelte zweite Signal auf Basis eines Vergleiches des ermittelten zweiten Signals mit einem zweiten definierten Schwellwert analysiert, um die Objektdetektion durchzuführen.

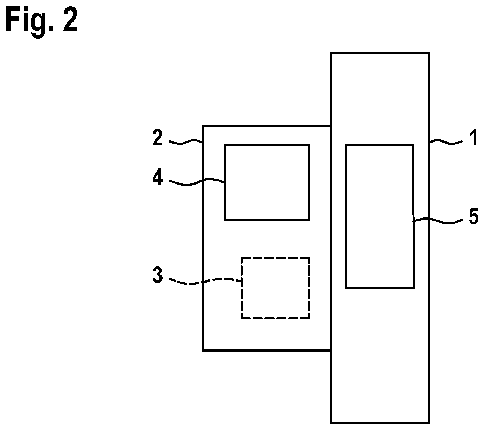

In Fig. 2 sind ein Ortungsgerät 2 mit einem Radarsystem 3 und einem Display 4 sowie ein Bauteil 1 mit einem Objekt 5 gemäß Ausführungsbeispielen der Erfindung dargestellt.

Das Verfahren gemäß Ausführungsbeispielen ermöglicht es insbesondere, Kanäle und/oder Radardaten mit nicht vernachlässigbarem Hintergrundsignal zu verarbeiten, welche dadurch vorteilhaft in einer Spot View Anwendung verwendet werden können. Die Spot View Anwendung ist insbesondere eine Anwendung, in welcher das Ortungsgerät auf einer Position verbleibt, ohne verfahren zu werden, um die Objektdetektion durchzuführen. Dazu wird vorzugsweise aus den Radardaten selbst an einer einzelnen Position das Hintergrundsignal, d.h. insbesondere eine Reflexion einer Oberfläche des Bauteils, geschätzt und dann von Radardaten abgezogen, um die Objektdetektion durchzuführen. Dadurch kann vorteilhaft ein Gerät realisiert werden, welches mindestens einen Kanal mit Hintergrundabzug, d.h. ein Entfernen des ersten, bzw. Hintergrundsignals, für einen Spot View verwendet. Dieser Kanal steht vorzugsweise immer zur Verfügung ohne dass das Gerät zuvor auf dem Material, bzw. dem Bauteil, bewegt wurde. Besonders vorteilhaft kann zusätzlich mindestens ein Kanal ohne Hintergrundabzug, d.h. ohne ein Entfernen des ersten, bzw. Hintergrundsignals, verwendet werden.

Zunächst kann ermittelt werden, aus welchen Signalen sich die Radardaten zusammensetzen. Betrachtet man ein Bauteil wie eine Wand, ein Boden oder eine Decke, als eine homogene Schicht der Dicke d, so erhält man insbesondere die folgenden zwei Reflexionsstellen. Eine erste Reflexionsstelle, d.h. insbesondere das erste Signal im Rahmen der vorliegenden Erfindung, kann ein Übergang der Luft zu dem Material, bzw. dem Bauteil sein. Da dies die erste Reflexionsstelle ist und die Radardaten beispielsweise auch noch nicht durch das Material gedämpft wurden, kann das hieraus resultierende Signal sehr groß sein und alle anderen Signale dominieren. Eine zweite Reflexionsstelle kann an einem Übergang zu dem Objekt gegeben sein. Wenn kein Objekt in dem Bauteil vorliegt, kann eine zweite Reflexionsstelle ein Übergang des Materials, bzw. dem Bauteil, zur Luft an der Rückseite der Schicht (z.B. Bauteil) sein. Je nach Dicke des Bauteils kann dieser Übergang gar nicht mehr im betrachteten Bereich (Tiefe) des Ortungsgerätes liegen. In jedem Fall kann das Signal durch die Dämpfung im Bauteil deutlich kleiner sein als das der ersten Reflexionsstelle und meist auch kleiner als Signale von Objekten in dem Bauteil.

In vielen Fällen kann es ausreichend sein, einen Reflexionsfaktor der ersten Reflexionsstelle zu schätzen. Dieser Reflexionsfaktor kann z.B. im Zeitbereich von weiteren Reflexionen, z.B. durch Objekte oder durch die Rückseitenreflexion, abgetrennt werden und dann von den Radardaten abgezogen werden, um die Objektdetektion durchzuführen.

Schwierig kann dieses Abtrennen werden, wenn sich ein Objekt in kleinem Abstand zu einer Oberfläche in dem Bauteil befindet. Dann kann eine Auflösung des Ortungsgerätes, bzw. des Radarsystems des Ortungsgerätes, eventuell nicht mehr ausreichen, um die Oberflächenreflexion der ersten Reflexionsstelle und eine Reflexion des Objekts voneinander zu trennen. Um diesem Problem zu begegnen, kann neben dem mindestens einen Kanal mit Hintergrundabzug, d.h. das Entfernen des ersten, bzw. Hintergrundsignals, mindestens ein Kanal ohne Hintergrundabzug verwendet werden. Wird an einer Position bereits ein Objekt im Kanal ohne Hintergrundabzug erkannt, so kann es vorkommen, dass der Hintergrundabzug nicht bestimmt werden kann, da das Objekt bereits erkannt wurde. In den Fällen, in denen ein Objekt nahe an der Oberfläche ist und sich das voranstehend genannte Problem ergeben würde, ist es wahrscheinlich, dass das Objekt bereits in einem Kanal ohne Hintergrundabzug erkannt werden kann. Der Hintergrundabzug entspricht dabei jeweils insbesondere dem Entfernen des ermittelten ersten Signals gemäß Ausführungsbeispielen der Erfindung.

Die voranstehende Erläuterung der Ausführungsformen beschreibt die vorliegende Erfindung ausschließlich im Rahmen von Beispielen.

Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Durchführen einer Objektdetektion in einem Bauteil (1) mit einem Ortungsgerät (2), umfassend die nachfolgenden Schritte:
- Bereitstellen (101) von Radardaten, wobei die Radardaten aus einer Erfassung eines Radarsystems (3) des Ortungsgerätes (2) resultieren, wobei das Radarsystem (3) in einem Bereich des Bauteils (1) angeordnet ist und für die Erfassung der Radardaten ein Radarsignal in Richtung des Bauteils (1) aussendet,
- Ermitteln (102) eines ersten Signals in den Radardaten, welches für eine zeitlich erste Reflexion in den Radardaten spezifisch ist, auf Basis einer Analyse der Radardaten,
- Analysieren (103) des ermittelten ersten Signals auf Basis eines Vergleiches des ermittelten ersten Signals mit einem ersten definierten Schwellwert, um die Objektdetektion durchzuführen,
wobei bei einem Unterschreiten des definierten Schwellwerts ferner die folgenden Schritte durchgeführt werden:
- Entfernen (104) des ermittelten ersten Signals aus den Radardaten, um gefilterte Radardaten zu erhalten,
- Ermitteln (105) eines zweiten Signals in den Radardaten, welches für eine zeitlich zweite Reflexion in den Radardaten spezifisch ist, auf Basis einer Analyse der gefilterten Radardaten,
- Analysieren (106) des ermittelten zweiten Signals auf Basis eines Vergleiches des ermittelten zweiten Signals mit einem zweiten definierten Schwellwert, um die Objektdetektion durchzuführen.

2. Verfahren (100) nach Anspruch 1,
**dadurch gekennzeichnet,**
**dass** das Ermitteln (102) des ersten Signals für zwei Kanäle des Radarsystems (3) durchgeführt wird und das Entfernen (104) des ermittelten ersten Signals aus den Radardaten sowie das Ermitteln (105) des zweiten Signals nur bei einem zweiten Kanal des Radarsystems (3) durchgeführt wird.

3. Verfahren (100) nach Anspruch 2,
**dadurch gekennzeichnet,**
**dass** einer der Kanäle, insbesondere der zweite Kanal, als Kopolarisationskanal und der weitere Kanal als ein zirkular polarisierter oder kreuzpolarisierter Kanal ausgebildet sind.

4. Verfahren (100) nach einem der vorhergehenden Ansprüche, **dadurch gekennzeichnet,**
**dass** das Bauteil (1) eine Wand, ein Boden oder eine Decke ist.

5. Verfahren (100) nach einem der vorhergehenden Ansprüche, **dadurch gekennzeichnet,**
**dass** der erste definierte Schwellwert und der zweite definierte Schwellwert unterschiedlich hoch sind, um mit dem zweiten definierten Schwellwert das Entfernen (104) des ermittelten ersten Signals zu berücksichtigen.

6. Verfahren (100) nach einem der vorhergehenden Ansprüche, **dadurch gekennzeichnet,**
**dass** ein Ergebnis des Analysierens (103) des ermittelten ersten Signals und/oder des Analysierens (106) des ermittelten zweiten Signals indiziert, ob ein Objekt in dem Bauteil (1) vorliegt oder nicht.

7. Verfahren (100) nach Anspruch 6,
**dadurch gekennzeichnet,**
**dass** das Verfahren (100) ferner den folgenden Schritt umfasst:
- Initiieren einer Anzeige des Ergebnisses auf einem Display (4) des Ortungsgerätes (2).

8. Computerprogramm (20), umfassend Befehle, die bei der Ausführung des Computerprogramms (20) durch einen Computer (10) diesen veranlassen, das Verfahren (100) nach einem der vorhergehenden Ansprüche auszuführen.

9. Vorrichtung (10) zur Datenverarbeitung, die eingerichtet ist, das Verfahren (100) nach einem der Ansprüche 1 bis 7 auszuführen.

10. Computerlesbares Speichermedium (15), umfassend Befehle, die bei der Ausführung durch einen Computer (10) diesen veranlassen, die Schritte des Verfahrens (100) nach einem der Ansprüche 1 bis 7 auszuführen.

11. Ortungsgerät (2) zum Durchführen einer Objektdetektion in einem Bauteil (1), umfassend ein Radarsystem (3) und ein Display (4), wobei das Ortungsgerät (2) ausgebildet ist, um die Schritte des Verfahrens (100) nach einem der Ansprüche 1 bis 7 auszuführen.
